# EUROPEAN PATENT APPLICATION

(11) **EP 1 753 051 A2**
(43) Date of publication of application: **14.02.2007**
(21) Application number: 06008067.8
(22) Date of filing: 19.04.2006
(51) Int. Cl.: H01M 2/06, H01M 2/36

(54) **Method and apparatus for providing a sealed container containing a detectable gas**

(30) Priority: 22.04.2005 US 673514 P
(71) Applicant: Greatbatch, Inc., Clarence, NY 14031 (US)
(72) Inventor: Pyszczek, Michael F., Leroy NY 14482 (US); Canaple, Nicolas, West Seneca NY 14224 (US)
(74) Representative: Colmer, Stephen Gary

(57) **Abstract**

An apparatus for making a hermetic device containing a detectable gas and comprising a surface having a fill port comprising a vacuum pump in communication with the hermetic device through a vacuum conduit; a liquid reservoir for containing liquid to be delivered to the hermetic device; a gas reservoir for containing a detectable gas to be delivered to the hermetic device; a transfer vessel for transferring a selected quantity of liquid and gas to the hermetic device; and a block for passing the selected quantity of liquid and gas through a fill port of the hermetic device, and disposing a seal into the fill port. A method for making a hermetic device containing a detectable gas, and an exemplary hermetic device comprising an electrochemical cell or a capacitor are also disclosed.

## Description

### BACKGROUND OF THE INVENTION

### 1. Field of the Invention

The present invention generally related to quality control of hermetic devices and, more particularly, to leak detection of sealed enclosures to ensure their hermeticity after completion of manufacturing. Leak detection is enabled by providing a detectable gas within the container during the hermetic device manufacturing process. Confirming hermeticity is critical for any sealed enclosure, especially one housing an electrical power source for an implantable medical device. The power source can be either an electrochemical cell or a capacitor.

In either case, the power source includes a negative electrode and a positive electrode physically segregated from each other by a separator and provided with an electrolyte. The specific chemistry of the cell or capacitor is not limited. For example, the cell can be of either a primary chemistry such as of a lithium/silver vanadium oxide or lithium/fluorinated carbon (CFₓ) couple or of a secondary chemistry such as a lithium ion cell and the capacitor could be a wet tantalum electrolytic type.

### 2. Description of Related Art

One industry standard for testing the hermeticity of sealed enclosures is based on helium detection. In this test, the enclosure is placed in a bombing chamber pressurized with helium. A typical pressure is 100 psi and resident time is from one hour to several days. If a leak exists, helium is forced into the void volume of the enclosure. The time and pressure chosen depend on the leak size to be measured and the size of the void volume in the enclosure. After the prescribed time, the enclosure is removed from the bombing chamber and put in a vacuum leak detector where the presence of helium indicates a leak.

This helium detection method is described in U.S. Patent Application Pub, No. 2005/0079620 to Eberhard et al., which is assigned to the assignee of the present invention and incorporated herein by reference. Reference may also be had to ASTM International Standard F2391-05, "Standard Test Method for Measuring Package and Seal Integrity Using HELIUM as the Tracer Gas."

The method of leak testing in which a bombing chamber is used is cumbersome and expensive to perform. It requires that the bombing chamber with a helium source be provided as a separate apparatus in the cell or capacitor manufacturing operation, and that separate steps be performed to place the finished electrical energy storage devices in the bombing chamber, pressurize the chamber with helium for a period of time (of up to several days), depressurize the bombing chamber, and move the helium-treated devices to a helium detection apparatus. These steps are performed solely for the purpose of infusing a small subset of non-hermetic (defective) cells or capacitors in a production batch with helium so that they can be identified in the subsequent helium leak test. The bombing operation is thus disadvantaged because it requires additional labor and capital equipment on the cell manufacturing line, and it reduces the throughput of the line.

### SUMMARY OF THE INVENTION

There is, therefore, need for a method and apparatus for infusing electrical energy storage device containers with helium or another detectable gas in the manufacturing process, which requires minimal capital and labor costs and which has a high production throughput.

Accordingly, embodiments of the present invention are provided that meet at least one or more of the following objects of the present invention.

It is an object of this invention to provide a method and apparatus for infusing a hermetic device with a detectable gas during the device fabrication process.

It is an object of this invention to provide a device that is infused with a detectable gas and hermetically sealed during the device fabrication process.

According to the present invention, therefore, an apparatus for making a hermetic device containing a detectable gas and comprising a surface having a fill port is provided. The apparatus comprises a vacuum pump in communication with the hermetic device through a vacuum conduit; a liquid reservoir for containing liquid to be delivered to the hermetic device; a gas reservoir for containing a detectable gas to be delivered to the hermetic device; means for transferring a selected quantity of liquid and gas to the hermetic device; and means for passing the selected quantity of liquid and gas through a fill port of the hermetic device, and disposing a seal into the fill port.

The means for transferring a selected quantity of liquid and gas to the hermetic device may be comprised of a transfer vessel including a housing having a proximal end, a distal end, and an inner bore; a piston disposed in the inner bore and operatively connected to a linear actuator by a rod extending through the proximal end; a discharge port disposed in the distal end of the housing and connectable to the hermetic device through a discharge conduit; a first inlet port in the housing in communication with the liquid reservoir through a liquid conduit, and a venting port in the housing.

The means for passing the selected quantity of liquid and gas through a fill port of the hermetic device, and disposing a seal into the fill port may be comprised of a block including a sealing surface contactable with the surface of the hermetic device including the fill port therethrough; a gasket disposable between the sealing surface and the surface of the device; a discharge passageway formed in the sealing surface and connectable with the fill port of the hermetic device; a transfer port in communication with the discharge passageway and in communication with the discharge port of the transfer vessel; a seal holding cavity alignable with the fill port of the hermetic device; a ramrod alignable with the fill port of the hermetic device, the ramrod having a distal end disposed in the seal holding cavity, a central region extending through a bore in a wall of the block, and a proximal end outside of the block. One or more fasteners are preferably used to secure the block to the hermetic device in order to attain a temporary seal between the block and the surface of the hermetic device.

In one preferred embodiment, the gas reservoir is in communication with the transfer vessel through a gas conduit connected to a second inlet port provided in the housing of the transfer vessel. The vacuum pump may also be in communication with the transfer vessel for the purpose of evacuating it before the transfer of liquid thereto, preferably through a venting conduit and a venting port in the housing of the transfer vessel. A three-way valve may be used to easily switch between the connection of the hermetic device to the vacuum pump, and the connection of the hermetic device to the transfer vessel.

The liquid reservoir may be comprised of a simple tank with a liquid conduit from the transfer vessel connected thereto. Alternatively, the liquid reservoir may be comprised of a receiver vessel including a wall, a bottom, and a sharp conduit stub in communication with the liquid conduit.

The receiver vessel may be shaped to accept a sealed container containing a pre-selected amount of liquid to be delivered to the hermetic device. The sealed container comprises a wall, an upper sealing membrane, and a lower sealing membrane. When the sealed container is fitted into the receiver vessel, the lower sealing membrane is punctured by the sharp conduit stub, thereby connecting the sealed container to the transfer vessel.

The apparatus preferably further comprises various valves in the vacuum conduit, the fluid conduit, the vent conduit, and the gas conduit. These valves are preferably electrically or pneumatically actuated, and are adapted to be connected to a programmable logic controller that is provided for automatic control of the apparatus.

In another embodiment, the gas reservoir is in communication with the liquid reservoir, and the apparatus is further comprised of means for contacting and dissolving the detectable gas in the liquid to be delivered to the hermetic device, such as a sparger immersed in the liquid reservoir.

Also according to the present invention, a method for making a hermetic device containing a detectable gas is provided comprising the steps of first providing an apparatus comprising a vacuum pump in communication with the hermetic device through a vacuum conduit; a liquid reservoir for containing liquid to be delivered to the hermetic device; a gas reservoir for containing a detectable gas to be delivered to the hermetic device; means for delivering a selected quantity of liquid and gas to the hermetic device; and means for passing the selected quantity of liquid and gas through a fill port of the hermetic device, and discharging a seal disposed therein into the fill port. The method further comprises the steps of connecting the means for passing the selected quantity of liquid and gas and discharging the seal to the hermetic device; evacuating the hermetic device; delivering the selected quantity of liquid and gas into the hermetic device; and disposing the seal in the fill port of the hermetic device.

In the instances wherein means for delivering a selected quantity of liquid and gas to the hermetic device comprises a transfer chamber, the method may also include the step of evacuating the transfer chamber and/or the step of delivering a selected quantity of liquid to the transfer chamber prior to delivering the selected quantity of liquid to the hermetic device.

The method may include the step of delivering a selected quantity of gas to the transfer chamber prior to delivering the selected quantity of liquid and selected quantity of gas to the hermetic device, or the step of dissolving the detectable gas in the liquid prior to delivering the selected quantity of liquid and gas into the hermetic device.

At the conclusion of the method, the means for passing the selected quantity of liquid and gas and discharging the seal to the hermetic device are unfastened and removed from the device.

Although the method and apparatus are adaptable to making a wide range of hermetic devices containing a detectable gas, they are directed in particular to the making of hermetic capacitors or electrochemical cells containing a detectable gas, which may be detected in subsequent leak testing of the capacitors or cells.

Accordingly, there is also provided an electrochemical cell or capacitor including a container comprised of an enclosing container side wall having a thickness and defining an interior space intended to contain a liquid; a surface including an opening in the container side wall; and a seal blocking the opening. Within the container, the cell further comprises an anode, a cathode, an electrolyte and a gaseous cavity within the container including a detectable gas.

By the term "detectable gas" is meant a gas, whether dissolved in the electrolyte, or not, that is not present in air in more than a trace amount. Air essentially comprises nitrogen and oxygen. There are also gases such as carbon dioxide and carbon monoxide, among others, present in air. Therefore, the presence of the detectable gas outside the confines of the container means that the container is, in fact, not hermetically sealed. The detectable gas may be selected from the group consisting of helium, argon, neon, krypton, xenon, and mixtures thereof. The detectable gas in the gaseous cavity is preferably helium, and is preferably present at a saturation concentration. At a saturation concentration, there is no pressure change inside the container attributed to the detectable gas. Electrolyte filing typically occurs at about 5 psig. This pressure is allowed to bleed off before the cell is hermetically closed under ambient pressure.

This is not to say that the pressure inside the container will never change during the discharge life of the cell. On the contrary, there can be some increase or decrease in internal pressure attributed to electrolyte decomposition and discharge or cycling of active materials. For example, carbonate-based solvents are known to decompose and produce carbon dioxide with an attendant increase in internal pressure above the ambient closing pressure.

The foregoing and additional objects, advantages, and characterizing features of the present invention will become increasingly more apparent upon a reading of the following detailed description together with the included drawings.

### BRIEF DESCRIPTION OF THE DRAWINGS

The present invention will be described by reference to the following drawings, in which like numerals refer to like elements, and in which:
Fig. 1 is a perspective view of one embodiment of an electrochemical cell hermetic device;
Fig. 2 is a cross-sectional view of the electrochemical cell of Fig. 1, taken along line 2 - 2 of Fig. 1;
Fig. 3 is a cross-sectional view of the fill port seal of the electrochemical cell of Fig. 1, taken along line 3 - 3 of Fig. 1;
Fig. 4 is a first alternative fill port seal that may be used in place of the seal of Fig. 3;
Fig. 5 is a second alternative fill port seal that may be used in place of the seal of Fig. 3;

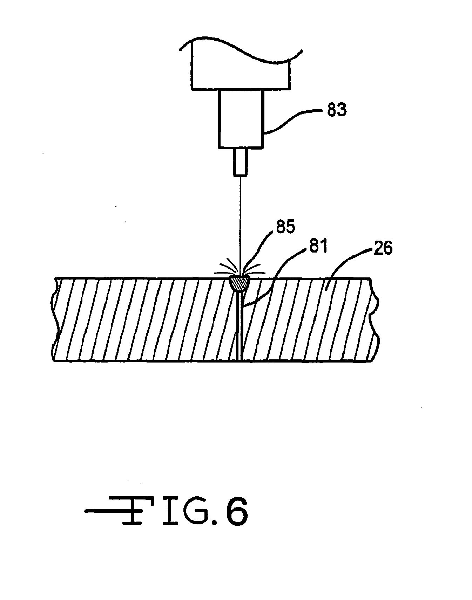

Fig. 6 is a cross-sectional view of another embodiment of a fill port being sealed by means of a laser melting the material of the side wall surrounding the fill port.
Fig. 7A is a first schematic illustration of an apparatus for infusing electrolyte and a detectable gas Into an electrochemical cell, and sealing the electrochemical cell; Fig. 7A also shows performing the step of evacuating the electrochemical cell;
Fig. 7B is a second schematic illustration of the apparatus of Fig. 7A, performing the step of partially filling a transfer vessel with electrolyte;
Fig. 7C is a second schematic illustration of the apparatus of Fig. 7A, performing the step of partially filling a transfer vessel with helium;
Fig. 7D is a second schematic illustration of the apparatus of Fig. 7A, performing the step of injecting the electrolyte and helium gas into the electrochemical cell; and
Fig. 8 is a detailed cross-sectional view of one means for passing a selected quantity of liquid and gas through a fill port of and electrochemical cell and for deploying a seal into the filling port after filling the cell with electrolyte and helium gas.

The present invention will be described in connection with a preferred embodiment, however, it will be understood that there is no intent to limit the invention to the embodiment described. On the contrary, the intent is to cover all alternatives, modifications, and equivalents as may be included within the spirit and scope of the Invention as defined by the appended claims.

### DETAILED DESCRIPTION OF THE PREFERRED EMBODIMENTS

For a general understanding of the present invention, reference is made to the drawings. In the drawings, like reference numerals have been used throughout to designate identical elements.

The present invention is directed to methods and apparatus for making a hermetic device containing a detectable gas. A device fabricated according to the methods and apparatus of the present invention may subsequently be placed in a testing device which is capable of detecting the detectable gas, and thus confirming that the device is hermetic, or is not hermetic, and therefore is defective.

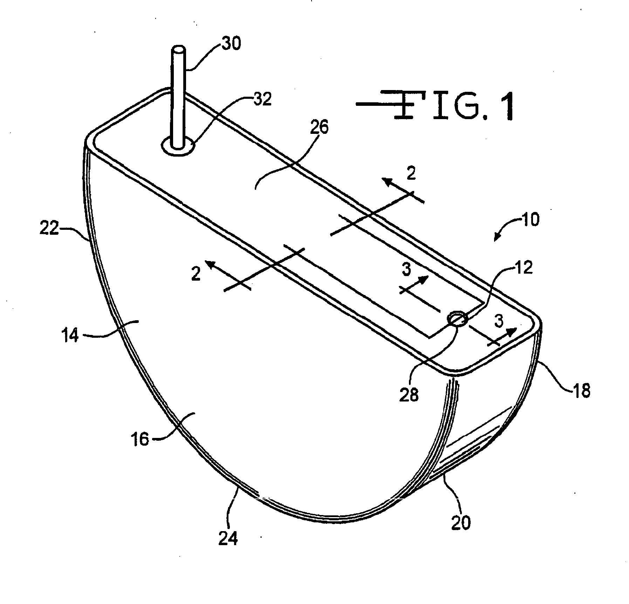

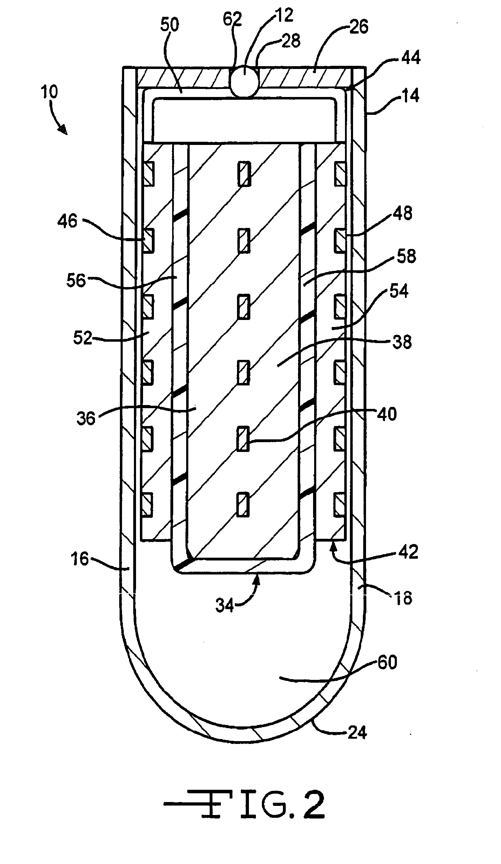

Referring now to the drawings, Fig. 1 shows a perspective view and Fig. 2 shows a cross-sectional view of an exemplary electrochemical cell 10 as a hermetic device provided with hermetic sealing means, for example, spherical shaped sealing member 12. While cell 10 is shown having a half-rounded shape, it will be readily apparent to those skilled in the art that in their broadest form such hermetic sealing means and the method and apparatus of the present invention are useful with all types and kinds of closed containers intended to hermetically hold a fluid (both in the gaseous and liquid form), independent of the spatial orientation of the container. The closed containers can have various shapes and sizes, and illustrative cell 10 should not be considered as limiting the present invention only to electrochemical cells. In that respect, the hermetic sealing means of the present invention is useful for providing a gas tight, hermetic seal in any opening in a container having any shape and size, including but not limited to e.g., capacitors, material sample vials, sensors, audio devices, and imaging devices. Further, the method and apparatus of the present invention are readily adapted for closing electrochemical cells having various types of chemistries such as alkali metal/solid cathode or alkali metal/oxyhalide electrochemical cells of both the solid cathode and liquid catholyte types.

As shown in Fig. 1, exemplary electrochemical cell 10 includes a casing 14 having spaced-apart front and back side walls 16 and 18 joined by curved end walls 20 and 22 and a curved bottom wall 24. The open top of the casing 14 is closed by a lid 26. The lid has an opening 28 that serves as a port for filling the casing 14 with electrolyte after the cell internal components have been assembled therein and lid 26 has been welded to the casing 14. In its final and fully assembled condition, the sealing member 12 is hermetically secured in the electrolyte fill opening 28 to close the cell in a gas tight manner. The casing 14, lid 26 and sealing member 12 are preferably of a conductive material. Suitable materials include nickel, aluminum, stainless steel, mild steel, nickel plated mild steel and titanium. Preferably, the casing 14, lid 26 and sealing member 12 are of the same material.

A terminal lead 30 for either the anode or the cathode is electrically insulated from the lid 26 and the casing 14 by a glass-to-metal seal 32. In a case-negative cell configuration, the lead 30 serves as the cathode terminal and the lid 26 and casing 14 serve as the negative or anode terminal, as is well known to those skilled in the art.

Referring now to Fig. 2, exemplary cell 10 is of the liquid electrolyte type comprised of a cathode electrode having a body 34 of solid cathode material in the form of plates 36, 38 pressed together and bonded against a cathode current collector 40. The cathode active material is preferably comprised of a metal, a metal oxide, a mixed metal oxide or a metal sulfide, and the cathode current collector 40 is fabricated from a thin sheet of metal. Suitable materials for the current collector include nickel, aluminum, stainless steel, mild steel and titanium.

Cell 10 further includes an anode electrode, generally designated 42, comprising a unitary, conductive member 44 which serves as the anode current collector and is fabricated from a thin sheet of metal such as nickel, having a pair of wing-like sections 46 and 48 joined by an intermediate web section 50. Anode elements 52 and 54 are in pressure bonded contact with and carried by corresponding ones of the electrode wing-like sections 46 and 48, respectively.

The anode element 52 is in operative contact with the cathode plate 36 through a thin sheet of separator material 56. Similarly, anode element 54 is in operative contact with cathode plate 38 through a thin sheet of separator material 58 such that separator sheets 56 and 58 surround and envelope the cathode body 34 to prevent direct physical contact with the anode plates 52,54.

The terminal lead 30 connected to the cathode current collector 40 extends through a header assembly comprising the glass-to-metal seal 32 fitted in the lid 26. Lead 30 is the positive electrical terminal, being connected to the cathode body 34. With the anode 42 being in operative contact with the conductive casing 14 through the web section 50 of the anode current collector in electrical contact with the lid 26 welded to the casing 14, the exemplary cell 10 is in a case-negative electrical configuration.

Cell 10 is completed by a liquid electrolyte 60 provided in casing 14 to activate the anode and the cathode, Electrolyte 60 is hermetically sealed in the casing 14 closed by lid 26 by the provision of the sealing member 12.

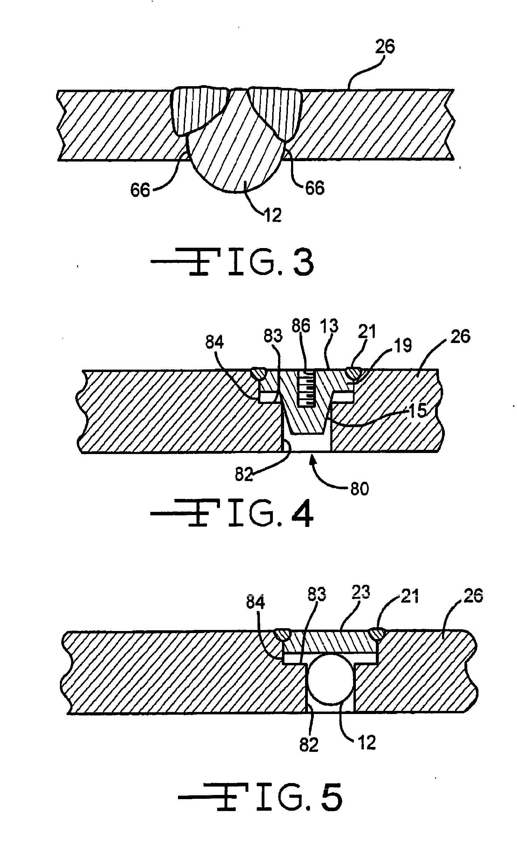

Fig. 3 is a cross-sectional view of the fiN port seal of the electrochemical cell of Fig. 1, taken along line 3 - 3 of Fig. 1. In one embodiment, the spherically shaped sealing member 12 is sized to be force-fit into sealing registry with the electrolyte fill opening 28 to form a secondary seal for the cell 10 until such time as the primary cell seal is formed by welding member 12 to the side wall 62 defining and surrounding the opening 28. In other words, the circumference of the side wall 62 surrounding the fill opening 28 is dimensioned and disposed to be similarly shaped but somewhat less in circumference than that of the spherically-shaped sealing member 12. Then, as the sphere is force-fit into the opening 28, the circumference of the side wall 62 is expanded by this force-fit insertion so that the reactive stress force for recovering the fill opening side wall 62 to its original circumference is applied to the contact area of sphere 12 thereby providing the secondary seal between the sphere and the opening side wall 62. Further, the side wall 62 is provided with a slight funnel taper 66 adjacent to the inside of the lid which prevents the sphere 12 from being inserted too far into the opening 28 while insuring that a projecting bulbous or protrusion portion of the sphere is flush or slightly recessed with respect to the upper surface of the lid 26 and is accessible from outside the cell. Thus, with the sealing sphere in its secondary sealing engagement with the side wall 62, the protruding portion faces outside the cell 10 and is easily accessible therefrom. To form the primary seal and thereby hermetically close the cell, the outwardly projecting protruding portion of sealing member 12 is fused to surrounding side wall 62 such as by means of weld 70 in a gas tight, hermetic engagement.

By way of example, the illustrative cell 10 shown in Figs. 1 and 2 can comprise an alkali metal electrochemical cell having a lithium anode in operative association with a solid cathode. In that case, the cathode is comprised of silver vanadium oxide material as described in U.S. Pat. Nos. 4,310,609 and 4,391,729 to Liang et al., or copper silver vanadium oxide as described in U.S. Pat. Nos. 5,472,810 and 5,516,340 to Takeuchi et al., all assigned to the assignee of the present invention, the disclosures of which are hereby incorporated by reference. Cathode current collector 40 is of titanium and terminal lead 30 is of molybdenum; separators 56, 58 are of polypropylene; electrolyte 60 is a 1.0M to 1.4M solution of LiAsF₆ or LiPF₆ in a 50:50 mixture of, by volume, 1, 2-dimethoxyethane and propylene carbonate; glass seal 32 is of TA-23 Hermetic sealing glass; and the sealing member 12, the casing 14 and the lid 26 are of stainless steel. Further details regarding electrochemical cell 10, and the primary and secondary seals as depicted in Fig. 3 are provided in U.S. Pat. No. 6,361,898 to Honegger, which is assigned to the assignee of the present invention and incorporated herein by reference.

In accordance with the present invention, the electrochemical cell 10 is filled through fill port 28 with electrolyte 60, and a detectable gas using the apparatus and methods of the present invention, which are described subsequently in this specification. The detectable gas is preferably delivered into the cell dissolved in the liquid electrolyte although it may be as a separate gas phase, or both.

Following completion of the process of sealing the cell and enclosing the detectable gas therein, the electrochemical cell 10 is tested to determine if a satisfactory hermetic seal was achieved by placing the cell in an instrument that is capable of sensing the presence of the detectable gas. In the instrument, the detectable gas will only be present if it is leaking from the cell, and thus the presence of the gas indicates that a hermetic seal of the cell was not attained. In one preferred embodiment, the detectable gas is helium, and the gas detection instrument and method may be as described in the previously discussed U.S. Patent Application Pub. No. 2005/0079620 to Eberhard et al., or as described in ASTM International Standard F2391-05.

The apparatus and method the present Invention may be adapted to fill port seals having alternative configurations. Fig. 4 is a first alternative fill port seal that may be used in place of the seal of Fig. 3. Fig. 5 is a second alternative fill port seal embodiment that may be used. Referring first to Fig. 4, a metal sealing member 13 is fit into a fill aperture 80 comprising a lower small diameter portion 82, a step 83, and an upper large diameter portion 84. Sealing member 13 is comprised of a lower frustoconical portion 15 which engages tightly in a secondary seal with the sharp edge formed at the intersection of lower portion 82 and step 83 of aperture 80. Sealing member 13 further comprises an upper cylindrical portion 19 which is disposed within upper portion 84 of aperture 80. A primary seal is subsequently formed between upper cylindrical portion 19 and upper portion 84 by weld 21.

Referring now to Fig. 5, a fill aperture 80 is provided as in the embodiment of Fig. 4. Spherical sealing member 12 is disposed within lower portion 82 as has been described for sealing member 12 of cell 10 of Fig. 3 to form a secondary seal. Subsequently, a second sealing member 23 is installed in the upper portion 84 of aperture 80, and a primary seal is subsequently formed between sealing member 23 and upper portion 84 by weld 21.

Further details on these and other fill port seals that may be adaptable to the use of the apparatus and methods of the present invention are provided in U.S. Pat. No. 6,610,443 to Paulot et al., which is assigned to the assignee of the present invention and incorporated herein by reference. It is also noted that this patent discloses an electrochemical cell including a clamshell configured casing with hermetic sealing means, and that the apparatus and methods of the present invention are also applicable to providing a detectable gas within such a cell.

In another embodiment of sealing the cell, the fill opening is sealed without the provision of a sealing member. In this embodiment, the lid 26 has a bore 81 of a diameter somewhat less than the previously described electrolyte fill openings or apertures 28 and 80 of lid 26. Instead of welding a sealing member or plug into the bore 81, the bore is closed by heating the lid material surrounding its perimeter with a laser 83. This causes the side wall material to melt and form a seal 85 sealing the opening when the molten material fuses together.

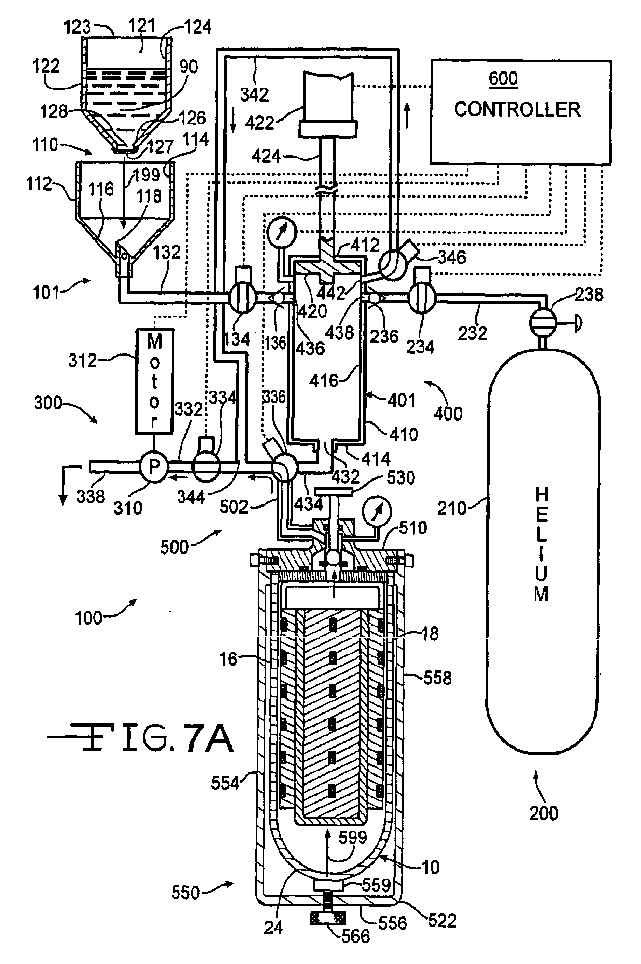

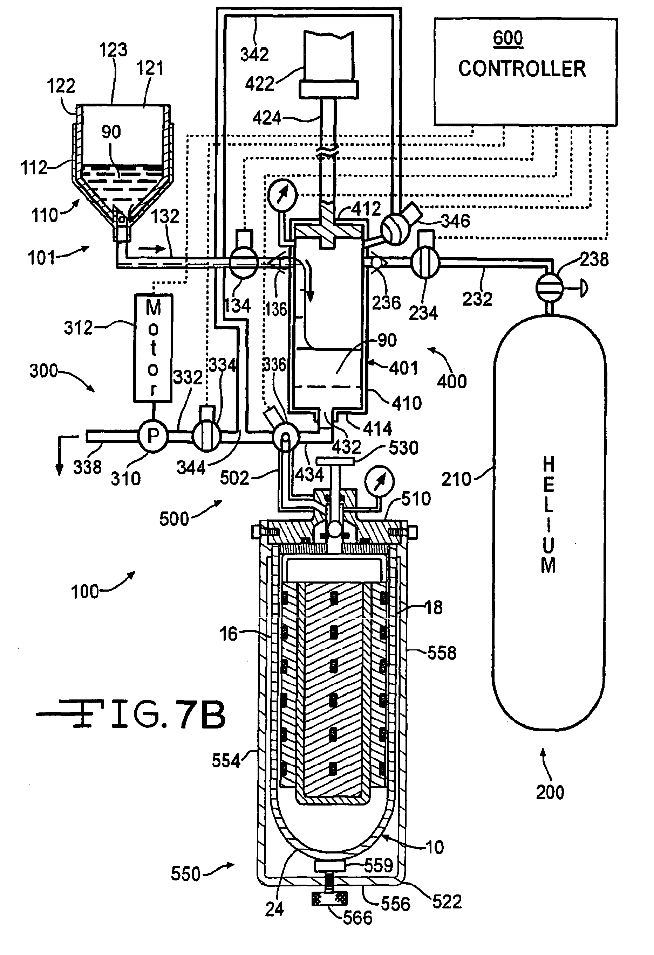

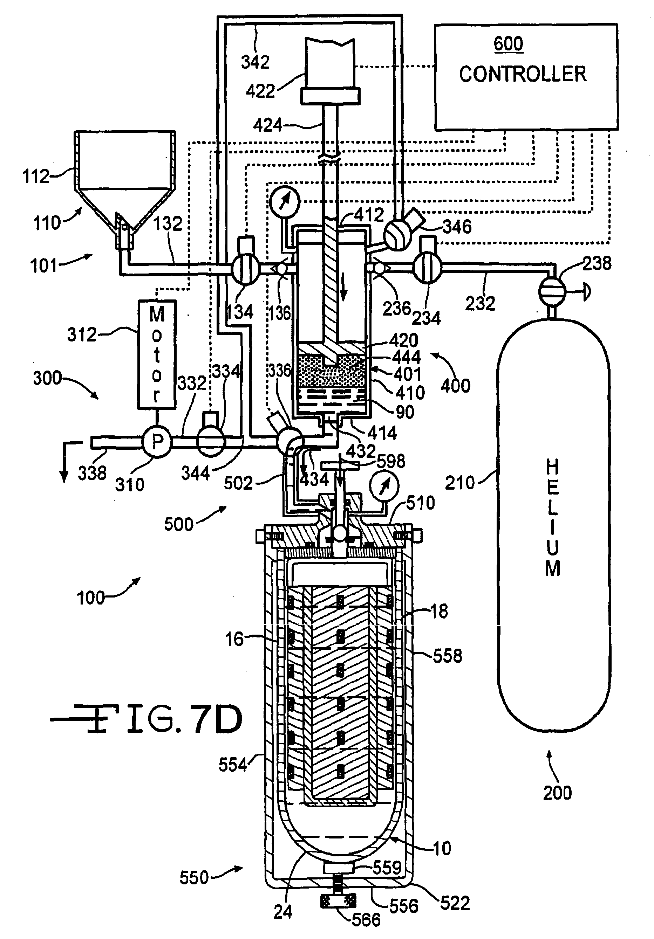

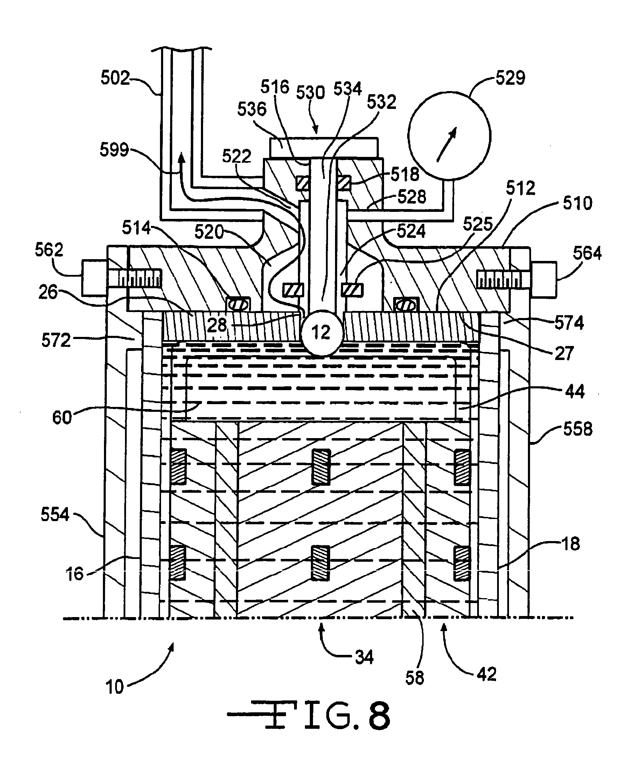

The apparatus and methods for making a hermetic device containing a detectable gas will now be described with reference in particular to Figs. 7A - 7D, and Fig. 8. Referring first to Fig. 7A, apparatus 100 is used to fill a hermetic device such as electrochemical cell 10 with a liquid and a detectable gas. Apparatus 100 is comprised of a liquid supply 101, a detectable gas supply 200, a vacuum system 300, means 400 for transferring a selected quantity of liquid and gas to the electrochemical cell, and means 500 for passing the selected quantity of liquid and gas through a fill port of the electrochemical cell, and disposing a seal into the fill port. Apparatus 100 may further include a programmable logic controller 600 that is provided for automatic control of the apparatus 100.

Liquid supply 101 is comprised of a liquid reservoir 110 that is connected to a conduit 132 for transferring liquid contained therein to transfer vessel 401. Liquid supply 101 may further comprise a control valve 134 disposed in liquid conduit 132 for on-off actuation of flow from liquid reservoir 110 to transfer vessel 401, and a check valve 136 for preventing any backflow of liquid or gas from transfer vessel 401 to valve 134 and/or liquid reservoir 110. Liquid supply 101 may further comprise a pump (not shown) for assisting in delivery of liquid to transfer vessel 401, or directly to electrochemical cell 10.

In one embodiment, liquid reservoir 110 may be comprised of a simple tank (not shown) for holding the liquid to be delivered to electrochemical cell 10. In such an embodiment, liquid supply 101 may also comprise a flow meter and/or flow totalizer (not shown) disposed in conduit 132 for measuring a selected quantity of fluid to be transferred to electrochemical cell 10. In this embodiment, conduit 132 may be connected to transfer vessel 401 as depicted in Fig. 7A, or conduit 132 may be connected into conduit 502 for delivery directly into electrochemical cell 10.

In an alternative embodiment depicted in Fig. 7A, the liquid reservoir 110 may be comprised of a receiver vessel 112 including a wall 114, a bottom 116, and a sharp conduit stub 118 in communication with the liquid conduit 132. Receiver vessel 112 may be shaped to accept a sealed container 122 containing a pre-selected amount of liquid 90 to be delivered to the electrochemical cell 10. The sealed container 122 comprises a wall 124, a bottom 126, a lower sealing membrane or septum 127 disposed upon and sealed to opening 128, and an upper sealing membrane 123. The headspace 121 in sealed container 122 may contain the same detectable gas that is provided by gas supply 200. When the sealed container 122 is fitted into the receiver vessel 112, septum 127 is punctured by the sharp conduit stub 118, thereby connecting the sealed container 122 to conduit 132 through opening 128.

Gas supply 200 is comprised of a gas reservoir 210 that is connected to a conduit 232 for transferring detectable gas contained in reservoir 210 to transfer vessel 401. Gas supply 200 may further comprise a control valve 234 disposed in gas conduit 232 for on-off actuation of flow from gas reservoir 210 to transfer vessel 401, and a check valve 236 for preventing any backflow of liquid or gas from transfer vessel 401 to valve 234 and/or gas reservoir 210, and an additional valve and pressure regulator assembly 238 connected to gas reservoir 210. In one embodiment, gas reservoir 210 may be a standard commercial gas cylinder that is capable of containing a gas and/or liquid phase at a pressure of 3,000 pounds per square inch or more.

In the preferred embodiment, the detectable gas contained in gas reservoir 210 is helium of at least about 99.9 weight percent purity. Helium is a preferred gas because it is commercially available and detectable by known methods, and in particular because it is highly fugitive due to its small molecular size. Thus the ability to retain helium within a sealed container is indicative of hermeticity. In alternative embodiments, other detectable gases may be used, such as argon, neon, krypton, xenon, and mixtures thereof.

Vacuum system 300 is comprised of a vacuum pump 310 driven by motor 312 and connected to conduit 332, and a control valve 334 disposed in vacuum conduit 332. In the preferred embodiment depicted in Fig. 7A, vacuum conduit 332 is connected to electrochemical cell 10 through three way valve 336 and through conduit 502 of the means 500 for passing the selected quantity of liquid and gas through the fill port 28 of the electrochemical cell 10. In an early step of the method of the present invention, vacuum system 300 is used to evacuate electrochemical cell 10 prior to filling electrochemical cell 10 with electrolyte and detectable gas. This is done by discharging any evacuated air or other gas in electrochemical cell 10 out through discharge conduit 338. Vacuum system may also include a trap (not shown) in conduit 332 for trapping any traces of liquid and preventing such liquid from reaching vacuum pump 310.

In one embodiment, vacuum system 300 may also be used to evacuate transfer vessel 401 prior to the filling of the transfer vessel with liquid from liquid supply 101. Referring again to Fig. 7A, vacuum system 300 further comprises conduit 342, which is connected at tee 344 to vacuum conduit 332, and is connected to transfer vessel 401 at venting port 442 in housing 410. When control valve 346 in conduit 342 is opened, vacuum pump 310 will evacuate transfer vessel 401, as well as cell 10.

In another embodiment (not shown), vacuum system 300 may be provided with an alternatively ported valve in place of valve 336, which allows evacuation of transfer vessel 401 and cell 10 simultaneously, or in sequence, and subsequently allows transfer of liquid and gas from transfer vessel 401 to cell 10. In this embodiment, it is not necessary to provide a dedicated vacuum conduit 342 connected to venting port 442.

Referring again to Fig. 7A, and in one preferred embodiment, the means 400 for transferring a selected quantity of liquid and gas to the electrochemical cell 10 is comprised of a transfer vessel 401 including a housing 410 having a proximal end 412, a distal end 414, and an inner bore 416; a piston 420 disposed in the inner bore 416 and operatively connected to a linear actuator 422 by a rod 424 extending through the proximal end 412; a discharge port 432 disposed in the distal end of the housing and connectable to the electrochemical cell 10 through a discharge conduit 434; a first inlet port 436 in the housing 410 in communication with the liquid reservoir 110 through liquid conduit 132, and a venting port 442 in the housing 410. Transfer vessel 401 is preferably also provided with a second inlet port 438 in the housing 410 in communication with the gas reservoir 210 through gas conduit 232. Piston 420 is provided with suitable sealing means (not shown) such as O-rings and/or lip seals around the circumference thereof, so that when linear actuator 422 displaces piston 42 axially along bore 416, the entire volume of liquid and gas contained therein is displaced through discharge port 432, with no blow-by past piston 420. Linear actuator 422 may be comprised of various known means for linear translation of an object, such as a ball screw and stepper motor assembly, a linear stepper motor, a hydraulic cylinder, and the like.

It will be apparent that other means 400 for transferring a selected quantity of liquid and gas to the electrochemical cell may be used instead of the transfer vessel and piston assembly of Fig. 7A. For example, one may use a flow meter and/or flow totalizer for measuring the selected quantity of fluid to be transferred to electrochemical cell 10, with a control valve used to start and stop the flow of fluid. The flow may be provided by a pressure source coupled to the fluid reservoir. The pressure source could be the reservoir of the detectable gas. Alternatively, the flow could be provided by a metering pump that is disposed in the fluid conduit between the liquid reservoir 110 and the electrochemical cell 10.

Referring again to Fig. 7A and also to Fig. 8 (which depicts seal 12 having been fitted into fill port 28 of cell 10), the means 500 for passing the selected quantity of liquid and gas through a fill port of the electrochemical cell 10, and disposing a seal 12 into the fill port 28 may be comprised of a block 510 including a sealing surface 512 contactable with the surface 27 of the cell 10 including the fill port 28 therethrough; a gasket 514 disposable between the sealing surface 512 and the surface 27 of the device; a discharge passageway 520 formed in the sealing surface 512 and connectable with the fill port 28 of the cell 10; a transfer port 522 in communication with the discharge passageway 520 and in communication with the discharge port 432 of the transfer vessel 401; a seal holding cavity 524 alignable with the fill port 28 of the cell 10; and a ramrod 530 alignable with the fill port 28 of the cell 10. Ramrod 530 is comprised of a distal end 532 disposed in the seal holding cavity 524 (prior to delivery of the seal 12 into fill port 28), a central region 534 extending through a bore 516 in a wall of the block, and a proximal end outside of the block. Ramrod 530 is axially movabie within bore 516 so that when ramrod 530 is pushed Inwardly, the distal end 532 of ramrod 530 forces seal 12 into fill port 28, thereby sealing fill port 28 as described previously herein.

In the embodiment depicted in Fig. 8, ramrod 530 is slidingly disposed in bore 516. A gasket 518 is provided to prevent the flow of liquid or gas into or out of the interstitial space between the central region 534 of ramrod 530 and bore 516 during vacuum and filling operations. In another embodiment (not shown), bore 516 may be provided with an extended length, with a portion thereof being threaded, and a corresponding portion of the central region 534 of ramrod 530 may also be threaded. Thus, by turning ramrod 530 within bore 516, the seal 12 may be pushed downwardly into fill port 28.

One or more fasteners are preferably used to secure block 510 to cell 10 in order to attain a temporary seal between surface 512 of block 510 and surface 27 of cell 10, and also to place ramrod 530, seal holding cavity 524, seal 12, and fill port 28 in alignment prior to the delivery of seal 12 into fill port 28. In the embodiment depicted in Figs. 7A and 8, fastener 550 is provided to attain such sealing and alignment. Fastener 550 is an assembly comprising a band 552 including a first side region 554 extending along one side wall 16, a bottom region 556 extending around bottom wall 24, and a second side region 558 extending along opposite sidewall 18. The upper portion of first side region 554 of band 550 is temporarily secured to block 10 with one or more fasteners 562, and upper portion of second side region 558 of band 550 is temporarily secured to block 10 with one or more fasteners 564.

Fastener 550 is further provided with a thumb screw 566 threadedly engaged with bottom region 556 of band 550 and provided with a pad 559 for contacting bottom wall 24 of cell 10. When thumb screw 566 is screwed inwardly, pad 559 is forced against bottom wall 24, applying a force indicated by arrow 599, which in turn forces surface 512 of block 510 against surface 27 of cell 10, thereby attaining a temporary seal between the surfaces.

The upper portions of first side region 554 and second side region 558 of band 550 are provided with tabs 572 and 574 protruding inwardly, so that when fastener 550 is fastened to block 510 and engaged with cell 10, ramrod 530, seal holding cavity 524, seal 12, and fill port 28 are placed in alignment. Although only one plane of alignment is depicted in Figs. 7A and 8, it will be apparent that an additional band may be provided with fastener 550 in the orthogonal vertical plane to properly align the components for fitting of the seal 12 in fill port 28.

When block 510 is fastened to cell 10, before seal 12 is deployed in fill port 28, discharge passageway 520 is connected to fill port 28 of cell 10. When vacuum is applied to conduit 502, gas inside of cell 10 flows outwardly through fill port 28, through discharge passageway 520, along the central region 534 of ramrod 530, through transfer port 522, and out through conduit 502 as indicated by arrow 599. In like manner, when liquid electrolyte and detectable gas are delivered in through conduit 502, they follow the opposite path into cell 10.

Referring again to Fig. 7A, seal holding cavity 524 serves to temporarily hold seal 12 within block 510, prior to the deployment of seal 12 into fill port 28. In the embodiment depicted therein, seal holding cavity 524 is provided in its lower region with a ring 525 of elastomeric material that is partially embedded in block 510. Prior to the fastening of block 510 to cell 10, the spherical seal 12 can simply be pushed past ring 525 into seal holding cavity 524. Ring 525 provides a weak force to hold seal 12 in place until ramrod 530 is used to force seal 12 into fill port 28. Alternatively, seal 12 may be provided with a coating or a small spot of adhesive that will hold it in cavity 524 until deployment into fill port 28.

The means 500 for disposing a seal 12 into the fill port 28 of cell 10 may also be used to dispose seal 12 into a fill port having the stepped configuration depicted in Fig. 5 and previously described herein. Additionally, means 500 may be adapted to dispose the seal 13 of Fig. 4 into a fill port having a stepped configuration. In such an embodiment, seal 13 is provided with a threaded bore 86 (Fig. 4), and the distal end 532 of ramrod 530 is correspondingly threaded so that ramrod 530 can be screwed into the seal 13 when the seal is placed in block 510. Seal 13 can then be pushed tightly into the stepped fill port of the cell, and ramrod 530 unscrewed and separated from seal 13.

Turning now to the fluid connections to block 510, in the embodiment depicted in Fig. 7A, both the vacuum system 300 and the transfer vessel 401 may be alternatingly in communication with cell 10, depending upon the position of the porting in three way valve 336. In another embodiment (not shown), block 510 may be provided with a second transfer port so that vacuum system 300 and transfer vessel 401 may be separately connected to cell 10.

Block 510 may also be provided with an additional port 528 for connection to a gauge 529 for monitoring the vacuum or pressure within block 510 and cell 10.

As described previously, apparatus 100 preferably comprises various valves 334, 134, 346, and 234 in the vacuum conduit, the fluid conduit, the vent conduit, and the gas conduit, as well as three-way valve 336. These valves are preferably electrically or pneumatically actuated, and are adapted to be connected to a programmable logic controller 600 that is provided for automatic control of the apparatus and method for making the hermetic device. Controller 600 is also connected to vacuum pump motor 312 and linear actuator 422.

Although embodiments of the invention have been described wherein the detectable gas is delivered to transfer vessel 401 and subsequently into cell 10 as a separate phase following the selected quantity of liquid electrolyte, it is not required that the detectable gas be provided in this manner. Instead, in a preferred embodiment (not shown) the gas reservoir 210 is in communication with the liquid reservoir 110, and the apparatus is further comprised of means for contacting and dissolving the detectable gas in the liquid to be delivered to the hermetic device, such as a sparger immersed in the liquid contained within liquid reservoir 110. The detectable gas such as helium is dissolved into the liquid electrolyte to its saturation point prior to delivery into cell 10.

Also according to the present invention, a method for making a hermetic device containing a detectable gas is provided. Referring again to Fig. 7A, the method begins by providing apparatus 100, and by fastening the means 500 for passing the selected quantity of liquid and gas and discharging the seal to the cell 10 as previously described herein and shown in Fig. 7A. Sealed container 122 containing a pre-selected amount of liquid 90 to be delivered is placed in receiver vessel as indicated by arrow 199, puncturing septum 127 as described previously.

Three way valve 336 is actuated by controller 600 to place vacuum system 300 in communication with cell 10. Vent valve 346 is opened to place vacuum system 300 in communication with transfer vessel 401. Vacuum pump 310 is started, and vacuum valve 334 is opened. Electrochemical cell 10 and transfer vessel 401 are evacuated to a pressure of at least about 100 milliTorr, and preferably about 1 x 10⁻⁶ Torr. When evacuation of cell 10 and vessel 410 is complete, vent valve 346 is closed, and three way valve 336 is closed, i.e. the porting of three way valve is positioned so that neither vacuum system 300 or transfer vessel 400 are in communication with cell 10.

Referring to Fig. 7B, a selected quantity of fluid is transferred from fluid reservoir 110 to transfer vessel 401. Liquid valve 334 is opened, and with transfer vessel 401 having been evacuated, liquid is drawn into transfer vessel from liquid reservoir 110. The entire selected quantity of liquid contained in sealed container 122 is transferred. In one embodiment (not shown), upper seal 123 is an elastic seal and stretched downwardly as the liquid drains from sealed container 122. Alternatively, sealed container 122 may be pressurized with detectable gas, which expands as the liquid is transferred. When the liquid transfer is complete, liquid valve 334 is closed.

In another embodiment (not shown), it is not necessary to evacuate transfer vessel 401 prior to filling it with liquid. In this embodiment, a pump may be used to transfer the liquid from the reservoir 110 to the vessel 401, or reservoir 110 may be pressurized such that the liquid is pressure-fed into transfer vessel 401. In either case, vent valve 346 is opened, and conduit 342 is not connected to vacuum pump 310, so that the air that is displaced from vessel 401 during liquid filling is simply vented to the atmosphere.

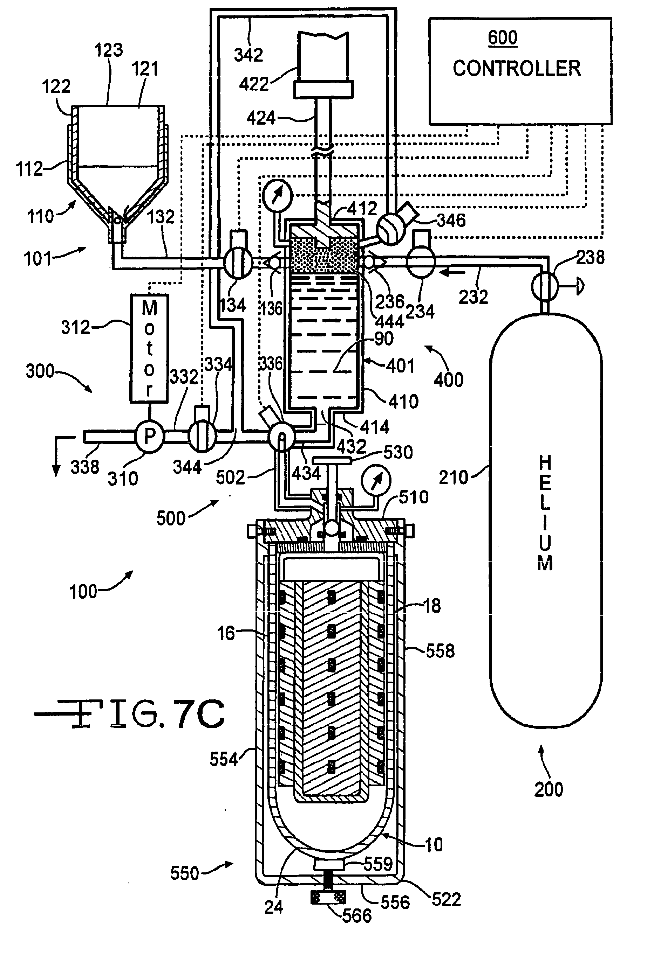

Referring to Fig. 7C, the remaining volume in transfer vessel 401 is filled with detectable gas. The valve in regulator assembly 238 is opened, gas valve 234 is opened, and the detectable gas fills cavity 444 above liquid 90 in transfer vessel 401. In the event that vessel 401 was not evacuated prior to filling with liquid and gas, valve 346 is also opened. A sufficient amount of detectable gas is delivered through cavity 90 so that the air therein is purged to a point where the gas in the cavity is of about the same composition as the detectable gas in reservoir 210. When the delivery of gas to cavity 444 in vessel 401 is complete, gas valve 234 is closed. It is noted that in the preferred method where the detectable gas was previously dissolved in the liquid contained in liquid reservoir 110, the step of delivering detectable gas to transfer vessel 401 is not necessary.

Referring to Fig. 7D, the liquid and gas in transfer vessel 401 are transferred to cell 10. Three way valve 336 is actuated so that the valve porting connects transfer vessel 401 to cell 10. Linear actuator is operated, pushing piston 420 downwardly, thereby displacing the liquid 90 and gas in cavity 444 into cell 10. When piston 420 has fully displaced the liquid and gas from transfer vessel 401, three way valve 336 is closed. It is noted that alternate means 400 for transferring the selected quantity of liquid and gas to the electrochemical cell (such as a pump or a pressure vessel) as described previously may be used, with the same result of filling of the cell 10 with liquid and the detectable gas being achieved.

Seal 12 is then force-fit into fill port 28 of cell 10 as indicated by arrow 598. Referring to Fig. 8, electrochemical cell 10 contains liquid electrolyte 60 in which cathode 34 and anode 42 are fully immersed. The detectable gas is at a saturation concentration in the electrolyte. The detectable gas saturated electrolyte preferably completely fills the cell container up to the Hd 26.

At the conclusion of the method, fastener 550 and means 500 for passing the selected quantity of liquid and gas and discharging the seal to the cell 10 are removed from the cell. Within the container 14, the resulting cell 10 comprises an anode 42 and a cathode 34 physically segregated from each other by the separator 58 and activated with electrolyte 60 housed within the container 14. The detectable gas in the electrolyte is preferably helium, although the other previously discussed gas can be used.

When the cell manufacturing process as described herein is completed, the cell may be tested for leakage of the helium as described previously in the aforementioned U.S. Patent Application Pub. No. 2005/0079620 to Eberhard et al. No use of a bombing chamber is needed as a pre-conditioning step before leak testing, since the cell already contains helium that will be detected if a hermetic seal was not achieved.

It is therefore apparent that there has been provided, in accordance with the present invention, a method and apparatus for making a hermetic device containing a detectable gas. While this invention has been described in conjunction with preferred embodiments thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1. An apparatus for making a hermetic device containing a detectable gas, the hermetic device comprising a surface including a fill port therethrough, and the apparatus comprising:
a) a vacuum pump in communication with the hermetic device through a vacuum conduit;
b) a liquid reservoir for containing liquid to be delivered to the hermetic device;
c) a gas reservoir for containing a detectable gas to be delivered to the hermetic device;
d) a transfer vessel comprised of a housing having a proximal end, a distal end, and an Inner bore; a piston disposed in the inner bore and operatively connected to a linear actuator by a rod extending through the proximal end; a discharge port disposed in the distal end of the housing and connectable to the hermetic device through a discharge conduit; a first inlet port in the housing in communication with the liquid reservoir through a liquid conduit, and a venting port in the housing;
e) a block comprising a sealing surface contactable with the surface of the hermetic device including the fill port therethrough; a gasket disposable between the sealing surface and the surface of the device; a discharge passageway formed In the sealing surface and connectable with the fill port of the hermetic device; a transfer port in communication with the discharge passageway and in communication with the discharge port of the transfer vessel; a seal holding cavity alignable with the fill port of the hermetic device; a ramrod alignable with the fill port of the hermetic device, the ramrod having a distal end disposed in the seal holding cavity, a central region extending through a bore in a wall of the block, and a proximal ° end outside of the block; and
f) a fastener adapted to secure the block to the hermetic device.

2. The apparatus as recited in claim 1 wherein the gas reservoir is in communication with the transfer vessel through a gas conduit connected to a second inlet port provided in the housing of the transfer vessel.

3. The apparatus as recited in claim 1 or claim 2 wherein the vacuum pump is in communication with the transfer vessel.

4. The apparatus as recited in any preceding claim, further comprising a three way valve connected to the discharge conduit of the transfer vessel, the vacuum conduit, and a common conduit in communication with the transfer port of the block.

5. The apparatus as recited in any preceding claim wherein the liquid reservoir comprises a receiver vessel induding a wall, a bottom, and a sharp conduit stub in communication with the liquid conduit; and a sealed container containing a pre-selected amount of liquid to be delivered to the hermetic device, the sealed container adapted to be fit in the receiver vessel and comprising a wall, an upper sealing membrane, and a lower sealing membrane puncturable by the sharp conduit stub when the sealed container is fitted in the receiver vessel.

6. The apparatus as recited in any preceding claim further comprising a programmable controller.

7. The apparatus as recited in any preceding claim further comprising means for contacting and dissolving the detectable gas in the liquid to be delivered to the hermetic device.

8. An apparatus for making a hermetic device containing a detectable gas, the apparatus comprising:
a) a vacuum pump in communication with the hermetic device through a vacuum conduit;
b) a liquid reservoir for containing liquid to be delivered to the hermetic device;
c) a gas reservoir for containing a detectable gas to be delivered to the hermetic device;
d) means for transferring a selected quantity of liquid and gas to the hermetic device; and
e) means for passing the selected quantity of liquid and gas through a fill port of the hermetic device, and disposing a seal into the fill port.

9. A method for making a hermetic device containing a detectable gas, the hermetic device comprising a surface including a fill port therethrough, the method comprising the steps of:
a) providing an apparatus comprising a vacuum pump in communication with the hermetic device through a vacuum conduit; a liquid reservoir for containing liquid to be delivered to the hermetic device; a gas reservoir for containing a detectable gas to be delivered to the hermetic device; means for delivering a selected quantity of liquid and detectable gas to the hermetic device; and means for passing the selected quantity of liquid and the detectable gas through a fill port of the hermetic device, and discharging a seal disposed therein into the fill port;
b) fastening to the hermetic device the means for passing the selected quantity of liquid and the detectable gas and discharging the seal;
c) evacuating the hermetic device;
d) delivering the selected quantity of liquid and the detectable gas into the hermetic device; and
e) disposing the seal in the fill port of the hermetic device.

10. The method as recited in claim 9 wherein the means for delivering a selected quantity of liquid and gas to the hermetic device comprises a transfer chamber.

11. The method as recited in claim 10 further comprising the step of evacuating the transfer chamber.

12. The method as recited in claim 10 or claim 11 further comprising the step of delivering a selected quantity of liquid to the transfer chamber prior to delivering the selected quantity of liquid to the hermetic device.

13. The method as recited in claim 12 further comprising the step of delivering a selected quantity of the detectable gas to the transfer chamber prior to delivering the selected quantity of liquid and selected quantity of the detectable gas to the hermetic device.

14. The method as recited in any of claims 9-13 further comprising the step of dissolving the detectable gas in the liquid prior to delivering the selected quantity of liquid and gas into the hermetic device.

15. An electrical energy storage device, which comprises:
a) a container comprised of:
i) an enclosing container side wall having a thickness and defining an interior space;
ii) a surface including an opening in the container side wall, the opening defined by an opening perimeter; and
iii) a seal sealing the opening;
b) an anode;
c) a cathode;
d) an electrolyte contacting the anode in electrochemical association with the cathode housed in the interior space of the container; and
e) a detectable dissolved in the electrolyte, detectable gas being selected from the group consisting of helium, argon, neon, krypton, xenon, and mixtures thereof.

16. The electrical energy storage device of claim 15 wherein the detectable gas is dissolved in the electrolyte to its saturation point.

17. The electrical energy storage device of claim 15 wherein the detectable gas is not dissolved in the electrolyte.

18. The electrical energy storage device of any of claims 15-17 wherein the detectable gas is comprised of at least about 99.9 weight percent helium.

19. The electrical energy storage device of any of claims 15-18 wherein the seal is comprised of a sealing member in a sealing relationship with the opening perimeter to block the opening.

20. The electrical energy storage device of any of claims 15-19 wherein the seal is comprised of a portion of the container side wall that has been rendered molten and then cooled to fuse the side wall material together to block the opening.
